# EUROPEAN PATENT APPLICATION

(11) **EP 2 399 850 A1**
(43) Date of publication of application: **28.12.2011**
(21) Application number: 10166890.3
(22) Date of filing: 22.06.2010
(51) Int. Cl.: B65G 61/00, B21D 43/22

(54) **Stacking line system and method**

(71) Applicant: ABB Technology AB, 721 83 Västerås (SE)
(72) Inventor: Boltà, Esteve, 08635, Sant Esteve Sesrovires (Barcelona) (ES); Fernandez, Isaac, 08202 Sabadell (Barcelona) (ES); Vinuales, Antonio-Lorenzo, 08019 Barcelona (ES)
(74) Representative: Kock, Ina

(57) **Abstract**

The invention relates to an improved stacking line system used to handle stacking of metal parts, workpieces, which may be semi-finished stamped parts or blanks (BL). The line includes conveyor apparatus (CNV) for transporting said metal blanks towards one or more stacking stations (SS1-3), where each stacking station is preferably arranged with at least one stacking pallet (St1-3L, St1-3R) on which said metal blanks are automatically stacked. At at least one stacking station an industrial robot (R1-R3) is arranged to pick, grip and lift a workpiece and stack it on said stacking pallet or in a rack. Moveable flaps (F1-F3) are arranged between the conveyor and a picking platform arranged above the conveyor line, from platform which the robot locates, grips and picks up the workpiece or blank, the position and orientation of which has been previously obtained through a vision (or other sensor) system, prior to stacking it. A method and a computer program for carrying out the method are also disclosed.

## Description

### TECHNICAL FIELD.

The present invention relates to a system and a method used to handle parts in a metal forming production process. The parts include workpieces which are finished or semi-finished parts as well as blanks for pressing or stamping. The system is particularly advantageous in production processes in blanking and press lines for the manufacture of parts for the automobile and the white goods industry. In particular the system is an improved stacking line capable of stacking or racking metal workpieces or blanks continuously and automatically at high speed.

### TECHNICAL BACKGROUND

High volume production of goods including stamped or pressed metal parts such as automobiles, washing machines and the like require that the presses used are supplied with a continuous and high volume stream of blanks or previously processed workpieces. A press line can be fed directly from a metal coil (especially for small sheet metal parts). Above a certain size, the press lines are fed with metal sheets that have been cut from the coil in a separate process, called the blanking process.

These blanks are produced in blanking lines using eg cut-to length shears for blanks where the outer edge of the may include a cut-out (open contours) or blanking presses for a blank which has a pierced hole or space surrounded by the material of the blank (closed contours). Open contour blanking techniques are used mainly for blanking strips made of sheet plates. This technique is similar to the action of a pair of scissors. In closed blanking processes, the sheared contour is closed, for example when a blank has a hole pierced or punched in it.

Transporting the blanks is most often done using conveyor belts. The conveyor belts may be arranged parallel or at right angles, relative to the long axis of the press or press line. An important step when transferring workpieces or blanks from a blanking machine or press to a next process using a conveyor in such automated lines is to centre the workpieces or blanks on the conveyor so that the workpiece or blank can be located, ie so that the position of it is known. However with a blank with a complex shape or with a workpiece of a certain shape, centring can be very difficult to achieve accurately on conveyor systems. The conveyors transport the blanks either lying or hanging away from the blanking line and toward adjustable stops, where the blanks are located and positioned by stoppers and crowders and then ejected onto pallets. The pallets are put on stacking carts equipped with lifting devices which are lowered continuously in order to permit precise stacking. Using two stacking carts in each such stacking device permits a continuous operation.

Depending on the dimensions, surfaces, and material of the blanks to be stacked, the system commonly uses magnetic conveyors, or vacuum cup conveyors or even a combination of the magnetic and vacuum cup systems to permit stacking of both steel and aluminium.

Ejecting the blanks accurately is done by de-activating a magnet or a vacuum cup system to drop the steel or aluminum blank at exactly the right time and place so that they fall onto the stacks, one on top of another, accurately aligned with the blank or workpiece below. Contour blanks with irregular shapes may require being positioned using part-specific guides (custom designed for each different shape), rails or other mechanical fixtures so that the blank or workpiece drops into place accurately on top of a stack. Accurately determining the position of a workpiece or blank is a recurring challenge for mechanical systems for locating and/or centering, especially with with blanks that are not regular.
The supply of metal blanks is then fed to a stacking line, at which the blanks are piled up in orderly stacks on a stacking pallet or similar.

The stacking pallets when full are then moved off the lifting table and away to a press or press line from which the blanks are removed one by one from the stacks and fed into the press, normally using an automated process. A detailed description of conventional blanking process methods and equipment may be found in such well known textbooks such as Metal Forming Handbook, Schuler © Springer-Verlag, Berlin, Heidelberg 1998 pages 286 to 290.

A conventional stacking line is a purpose-built production line apparatus which receives a stream of cut blanks and feeds them automatically on to a stacking pallet or stacking trolley. Preferably the stacking line has two stacking pallets, so that when the first stacking pallet or trolley is full the stacking line apparatus switches automatically and feeds subsequent blanks onto a second stacking pallet or trolley. The first stacking pallet or trolley is then moved away to the press line to feed the presses. By using two stacking pallets a continuous supply of stacked metal blanks is provided to the next production process.

In the same way workpieces, finished or semi finished parts that have been through at least one forming process after being cut into a blank, may be stacked up after completing the at least one process. Blanks or workpieces, but more often workpieces may be stacked on top of each other or stacked with a separator element, eg made of paper, card or plastic, inserted between workpieces to stop surface damage.

Alternatively workpieces may be stacked in a rack, where each workpiece is placed on a separate shelf of a horizontal rack or in a separate box or slot of a vertical rack. Preferably the rack is so designed and constructed that the location in space of each workpiece in the rack is accurately determined and known.

In most cases, on press lines, as in most industrial operations, a dependable and continuous supply of raw material, ie metal blanks, or semi finished parts is required without any interruptions that could cause a delay or disturbance in the cycle time of the press line. Uneven cycle times or unplanned wait periods affect the technical accuracy of handling machinery and production machinery in a negative way.

When high volume production is planned then a stacking line is designed and built specifically so to stack the necessary number of metal blanks and workpieces into stacks for feeding presses at the planned production rate. Such lines are designed and built to overcome the difficulties of correctly locating each workpiece or blank that has to be stacked on to a stack (eg blanks) or stacked in a rack eg workpieces or semi-finished parts (or blanks). Such purpose-built machines are expensive although, for very high volume production, the fixed cost may be amortized or distributed over a high production volume.

However for medium volume or batch production of metal parts the time and expense of building stacking lines to handle a given volume of specific metal blank size leads to time delays or can make shorter production runs un-economic. Simple physical operations such as correctly aligning blanks or locating workpieces require extensive mechanical reconfiguration or new fixtures. In addition, with the traditional type of purpose-built stacking line significant alteration or changes of the line to accommodate a variation in the product are usually not possible, and the line has to be replaced or substantially re-built.

### SUMMARY OF THE INVENTION

The aim of the present invention is to provide an improved system for stacking parts after blanking or stamping. This and other aims are obtained by a system characterised by the attached independent claims. Advantageous embodiments are described in sub-claims to the above independent claims.

In a first aspect of the invention, a system is provided in the form of a stacking line for stacking of metal workpieces comprising a conveyor apparatus for transporting said metal workpieces towards one or more stacking stations, where each stacking station is arranged with at least one stacking pallet on which said metal workpieces are automatically stacked, wherein at least one industrial robot is arranged at at least one stacking station to pick, grip and lift a said metal workpiece and stack it on a said stacking pallet.

According to another embodiment, a system is disclosed in the form of a stacking line for stacking of metal workpieces comprising a conveyor apparatus and one or more stacking stations, where each stacking station is arranged with at least one stacking pallet on which said metal workpieces are automatically stacked, wherein
one or more picking platforms are arranged fixed above said conveyor apparatus and arranged for receiving a said metal workpiece.

According to another embodiment, a system is disclosed in the form of a stacking line for stacking of metal workpieces, said system comprising a conveyor apparatus for transporting said metal workpieces towards one or more stacking stations, where each stacking station is arranged with at least one stacking pallet on which said metal workpieces are automatically stacked, wherein at least one lifting apparatus is arranged between the conveyor and the picking platform P1-P3) in order to move said metal workpiece up from the conveyor for said metal workpiece on to a picking platform.

According to another embodiment a system is disclosed in the form of a stacking line for stacking of metal workpieces, comprising a conveyor apparatus for transporting said metal workpieces towards one or more stacking stations, where each stacking station is arranged with at least one stacking pallet on which said metal workpieces are automatically stacked, and wherein at least one said one or more stacking stations is with at least one industrial robot in the form of a 4-7 axis robot or a multi-robot with more than one manipulator.

According to another, further, embodiment a system is disclosed in the form of a stacking line for stacking of metal workpieces, comprising a conveyor apparatus for transporting said metal workpieces towards one or more stacking stations, where each stacking station is arranged with at least one stacking pallet on which said metal workpieces are automatically stacked, and wherein two or more stacking pallets are arranged adjacent at least one stacking station with at least one stacking pallet on the opposite side of the conveyor to another stacking pallet.

According to another embodiment a system is disclosed in the form of a stacking line for stacking of metal workpieces, comprising a conveyor apparatus for transporting said metal workpieces towards one or more stacking stations, where each stacking station is arranged with at least one stacking pallet on which said metal workpieces are automatically stacked, and wherein two or more stacking pallets are arranged adjacent the stacking station with the two or more stacking pallets on the same side of the conveyor.

According to another, further, embodiment a system is disclosed in the form of a stacking line for stacking of metal workpieces, comprising a conveyor apparatus for transporting said metal workpieces towards one or more stacking stations, where each stacking station is arranged with at least one stacking pallet on which said metal workpieces are automatically stacked, and wherein at at least one stacking station one single stacking pallet at a time is arranged for stacking adjacent to the stacking station.

According to another, further, embodiment a system is disclosed in the form of a stacking line for stacking of metal workpieces, comprising a conveyor apparatus for transporting said metal workpieces towards one or more stacking stations, where each stacking station is arranged with at least one stacking pallet on which said metal workpieces are automatically stacked, and wherein said system comprises one or more sensors, cameras and/or estimation or calculation devices for detecting position of a workpiece on any from the group of the conveyor, the conveyor at a specific position, a picking platform, the robot gripper (GL).

When compared to todays purpose-built hard automated stacking lines the advantage of robots is, apart from being a more simple solution, their flexibility to cope with very different type of blanks, both in blanking lines with cut-to length shears (open contours) or blanking presses (closed contours), and in particular with blanks having closed contours, as well as finished or semi-finished part that has already been through at least one stamping or pressing operation. In the following description the word workpieces will be used to describe both a blank and a finished or semi-finished part that has already been through at least one stamping or pressing operation.

The main challenge, when trying to stack workpieces and especially for blanks with robots, is to be able to carry out the stacking at as high input rate as is achieved by the blanking or stamping process. This production rate depends very much on the part size. As an example, blanks for body side parts for automobile bodies, eg 3-4 metres long, is around 15 to 30 blanks/min currently. The challenges related with this high speed are:
- The handling process itself
- When trying to collect the workpieces (blanks or parts), they should be already located, meaning the workpieces whether blanks or stamped parts should already be in a position on the conveyor which is accurately known or can be accurately measured, in order to achieve accurate and correct stacking in the stack or racking in the rack if we refer to stamped parts. This is not easy at high conveyor speeds because at high speeds conveyors can have a tendency to vibrate and so the location (position) of the workpiece (blank or part) can become hard to determine.

The innovative idea solves both challenges:
- A sequential picking and stacking of the workpieces (whether blanks or parts) creates two or more parallel operations downstream of the process, multiplying the available stacking cycle, and thus the stacking rate, by "n", where "n" is the number of stacking stations placed along the exit conveyor of the blanking line.
- At each stacking station a lifting device or flap is arranged to move the part from the conveyor on to a surface from which the parts are picked up by the robot. Thanks to the flaps, the workpieces (blanks or parts) are removed from the conveyor, and placed on a still and stable picking platform from which it is much quicker for the robot to localise the blank accurately.

The flaps can be attached to the main conveyor CNV or to the picking platform. In the first case they would rotate or move up from the conveyor to divert the part up to the picking platform. In the second alternative, the flap would rotate down from the picking platform to lift the part moving up to the picking platform. The picking platform may be equipped with motors, or moveable components such as rollers or an additional conveyor belt on the picking platform or comprised in the flap, for quick and accurate movement of the workpiece/part lifted up from the conveyor.

The improved stacking or racking line may be designed and manufactured and assembled, in a comparatively short time. Standard components fitted together in a modular way simplifies both design and the building schedule for a stacking line. A short time to assemble and build means a shorter time required to install the line in a factory, meaning less downtime and disruption in the factory. In addition the traditional mechanised lifting tables, particularly in case of blanking, required to jack up and then incrementally lower the pallet, container, rack or trolley as it is filled up with stacked workpieces, can be eliminated as this equipment is no longer necessary at each stacking or racking station. The robot automatically places each workpiece at the correct height when stacking on a stacking pallet or rack, starting with eg the bottom level and successively placing the workpiece or blank higher up.

An advantage of the improved stacking/racking line is the greater flexibility of using non-custom components to make the line. When a change in size or shape of the metal blanks is required but inside limits for the line, the robots can be re-programmed, the control units re-programmed, and the stacking line used to stack a different size or shape of blanks. The time taken to produce product variations, or batch runs is significantly changed. A greater degree of flexible manufacturing is also provided by the improved stacking line. In addition workpiece location by robots, or robots at stacking stations arranged with eg information from vision systems, ensure that time to pick the workpiece, ie time to locate the workpiece for gripping, is short and the position information is retained by the robot system for later handling. This is equally true for irregular or complex shaped workpieces or blanks as well as for simple and geometrically symmetrical blanks. Robots together with vision systems are fast and highly accurate regardless of the workpiece shape.

Life cycle costs and downtime for maintenance are reduced by using standard industrial components, and industrial robots. Predictable service life for standard components means that maintenance can be performed at planned intervals, and replacements obtained quickly and economically to minimise downtime.

According to a second aspect of the invention a method for carrying out stacking of metal workpieces using a stacking line system comprising a conveyor apparatus for transporting said metal workpieces towards one or more stacking stations, where each stacking station is arranged with at least one stacking pallet on which said metal workpieces are automatically stacked, and wherein by the actions of operating at least one industrial robot and controlling it to pick, grip and lift a said metal workpiece and stack it on a said stacking pallet.

In addition the speed or volume of production of a stacking line may be changed by adding or shutting off a stacking station. Thus the improved stacking line may be expanded, up to a point, in a modular way. An additional stacking station, robot and stacking pallet or pallets may be added and the rate of volume production can be scaled up in proportion.

A computer program, a computer program stored in a memory storage device, and a computer program recorded on a computer-readable medium, which program is suitable for use with a processing unit having an internal memory in which the computer program or computer program product comprising software code portions may be loaded therein, is disclosed in another aspect of the invention.

### BRIEF DESCRIPTION OF THE DRAWINGS

A more complete understanding of the method and system of the present invention may be had by reference to the following detailed description when taken in conjunction with the accompanying drawings which, schematically and only by way of a non-restrictive illustration, represent a practical embodiment of the invention. In the drawings:
Figure 1 shows in a simplified block diagram a stacking line according to an embodiment of the invention;
Figures 2-8 show diagrams from a computer simulation of the operation of the invention of Figure 1 and in particular showing a sequence of operations at each of three stacking stations of the stacking line;
Figure 9 shows a flowchart for a control method for operating the system of Figure 1 and in particular one or more methods for stacking blanks in turn at different stacking stations.
Figure 10 shows a schematic diagram of the invention of Figure 1 and in particular and embodiment showing a sequence of operations at one stacking station of the stacking line arranged with racks; and Figure 11a and 11b (Prior Art) shows schematically two known types of racks in which workpieces handled by the invention of Figure 1 may be stacked in.

### DESCRIPTION OF THE PREFERRED EMBODIMENTS

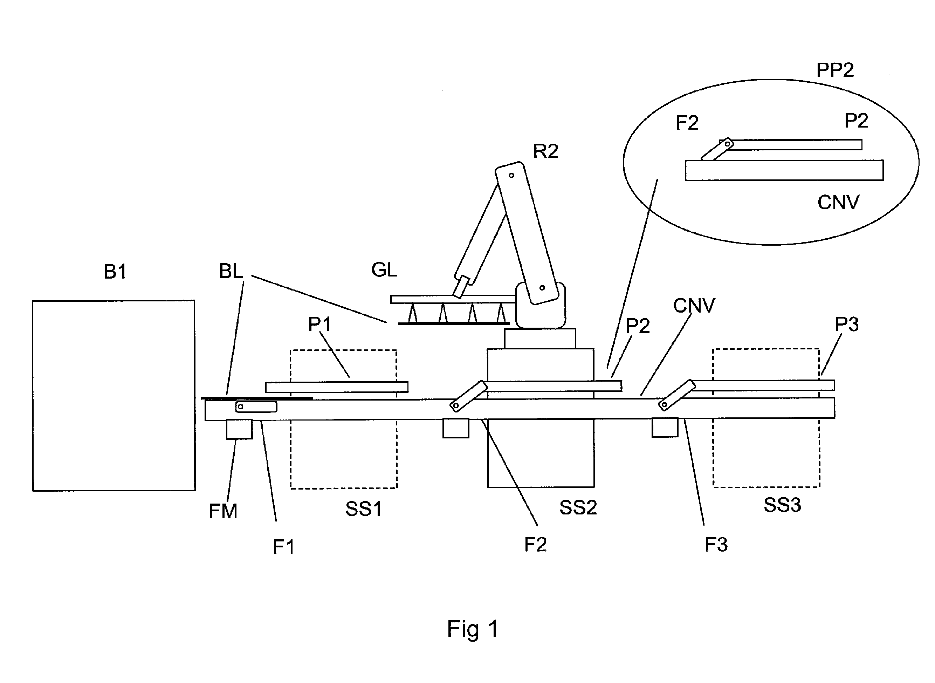

Figure 1 shows part of a stacking line. The figure shows a production machine which may be a blanking machine B1 in the case of handling blanks or may be a press or press line ejecting semi finished parts. The word workpieces used here refers to both blanks and parts that have had at least one pressing or stamping operation. The figure also shows a conveyor line CNV transferring workpieces away from the production machine BL, arranged in this exemplary example with three stacking stations SS1-SS3. The production machine, in this example a blanking machine B1, produces metal blanks BL and deposits them one at a time on the conveyor where they are moved in this diagram from left to right.

In each of the three stacking stations a picking platform P1-P3 is arranged fixed in place above the surface of the transport conveyor CNV. The picking platform is arranged high enough for a workpiece on the conveyor to pass under it. The conveyor is further arranged at each stacking station with a lifting apparatus or flap F1-F3. The lifting apparatus or flap, such as F2, is moveable and operated synchronised with the approach of a metal blank. The flap is arranged to lift the leading edge of the metal blank up so that the movement of the conveyor then slides the metal blank on to a picking platform such as P2 at the stacking station.

One stacking station, SS2 is shown arranged with a robot R2. For the purposes of visual clarity in this diagram only one stacking station SS2 is shown drawn with a robot. (In this example there would otherwise be shown three robots R1-3). Robot R2 is arranged with a gripper tool GL which is preferably arranged with a number of suction cups to grip the metal blank BL or another type of workpiece without marking it.

The most preferable operating sequence begins with a first blank on the conveyor approaching the first stacking station SS1. The flap F1 is lifted up and the first blank slides on to the first picking platform P1. Flap F1 is then retracted, ie moved back to position in line with the conveyor. Once it has been detected that the workpiece, in this case a blank, is on the picking platform, then Robot R1 (not shown in Fig 1) grips the blank, lifts it, and moves it away from the platform and places on a stack (not shown in Fig 1).

In or about the time interval when robot R1 is handling the first blank, a second blank travels under picking platform P1 and approaches the second stacking station SS2. The second lifting apparatus F2 lifts up and the second blank is pushed onto the picking platform P2 of the second stacking station. Flap 2 retracts and closes. Given a check signal that the workpiece is on the picking platform then Robot R2 grips, lifts, turns and then places the second blank on to a stack (not shown in Fig 1) of the stacking station SS2. The check signal may be from a sensor on the picking platform or on the robot, and may be from a vision system or from other sensors or switches, or from a combination of sensor signals.

In or about the time interval when robot R2 is handling the second blank, a third blank travels under picking platforms P1 and P2 and approaches the third stacking station SS3. The third lifting apparatus F2 lifts and the third blank is pushed onto the picking platform P3 of the third stacking station. Flap 3 retracts and closes if stacking station 3 is not the last station in the stacking line. Robot R3 (not shown) grips, lifts, turns and then places the third blank on to a stack (not shown in Fig 1) of the stacking station SS3. If the third stacking station SS3 is the last station in the stacking line then the lifting apparatus F3 may be arranged fixed in the up position, and not normally lifted and retracted between stacking cycles.

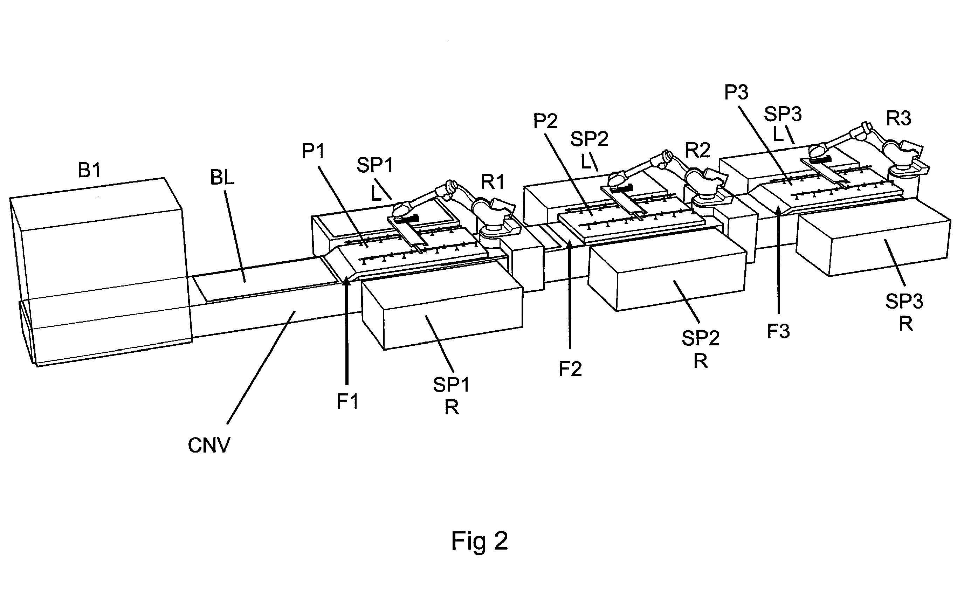

Thus the workpieces produced by the production machine, in this example a blanking machine B1, move along the conveyor to the stacking stations SS1-SS3. When the flap F1 is Up, the blank will be lifted onto the picking platform P1. Figure 2 shows a diagram of the stacking line with additional details. Figure 2 shows a stacking line again with the production machine exemplified by a blanking machine BL, a conveyor CNV and a first stacking station arranged with a picking platform P1 fixed above the conveyor. An industrial robot R1 is arranged at stacking station SS1 and positioned to reach the picking platform P1 above the conveyor. The first stacking station SS1 has two stacking pallets St1R - St1L or similar each arranged on one side of the conveyor, ie a left side and a right side. Thus at the first stacking station SS1 robot R1 will pick the metal blank BL and load it on a stack. When the Left side stack St1L is full, robot R1 will load the blanks on right side stack St1R. During this time the stack full of blanks or rack full with semi-finished parts is moved away to the next production stage and a empty container or stacking pallet or rack put in place at, eg St1L on the left side.

Arranging two stacking pallets or racks one each on either side of a conveyor is not optimum in every factory situation. Another approach is to arrange two containers on the same side of the conveyor, one upstream of the robot, one downstream of the robot, and changeover stacking pallets/containers when full as for the left-side/right-side arrangement above.

The invention may also be applied, in another embodiment, to a stacking line comprising a stacking station with one single stacking pallet or rack. Thus the stacking station is arranged with one stacking pallet or rack. To avoid delays when the single stacking pallet or rack is full and needs to be swapped with an empty one at least one extra stacking station may be included in the stacking line, for example positioned downstream of the single pallet stacking station. This alternative of only one single stacking pallet per station has an advantage of minimising the number of stacks of blanks or other workpieces required, and so simplifying the logistics in the production area or factory. When the stacking pallet or container has been filled with workpieces, the robot stops and waits, and the flap of that stacking station is held retracted (lowered). A further option is two robots may be arranged at one or more stacking stations to stack workpieces onto the same single pallet to minimise the number of stacks in the production area or factory. Successive workpieces pass under the picking platform of that stacking station to one of the stations downstream for stacking until the full container has been moved away and has been replaced by an empty stacking pallet or rack. Then stacking resumes at that single pallet stacking station. The extra stacking station may alternatively be placed upstream of the single container stacking station.

Regarding Figures 1 and 2, when the first lifting apparatus F1 is in the down position, the next workpiece will pass through under the picking platform P1 and will be lifted by flap F-2 onto the picking platform P2 of stacking station SS2. Robot R2 will operate in the same way as robot R1. When both flaps F1 & F2 are in the down position, the next blank will pass through under picking platforms P1 & P2 and will be lifted by the third lifting apparatus flap F3 onto platform P3. (If the third stacking station is the last station of the line then flap F3 is preferably fixed in the up position). Robot R3 will then operate in the same way as robot R1 or R2.

The flaps F1-F3 provide a means for the workpiece to be diverted from the conveyor and placed on another surface. In the examples described the flap provides an inclined plane leading up from the conveyor to the picking platform. In the examples so far described the flaps are hinged or pivoted or otherwise fixed to the conveyor and movable so that the workpiece may be moved between the conveyor and the picking platform. In an alternative arrangement shown in a detail sketch PP2 in Fig 1, any of the lifting apparatus flaps F1-F3 may be constructed so that it is attached to the picking platform P1-P3 rather than fixed to the conveyor CNV. Thus a flap is moveably attached to the picking table, not the conveyor, and moved down from the picking table to provide an inclined slope along which the workpiece is moved into a position on the picking platform.

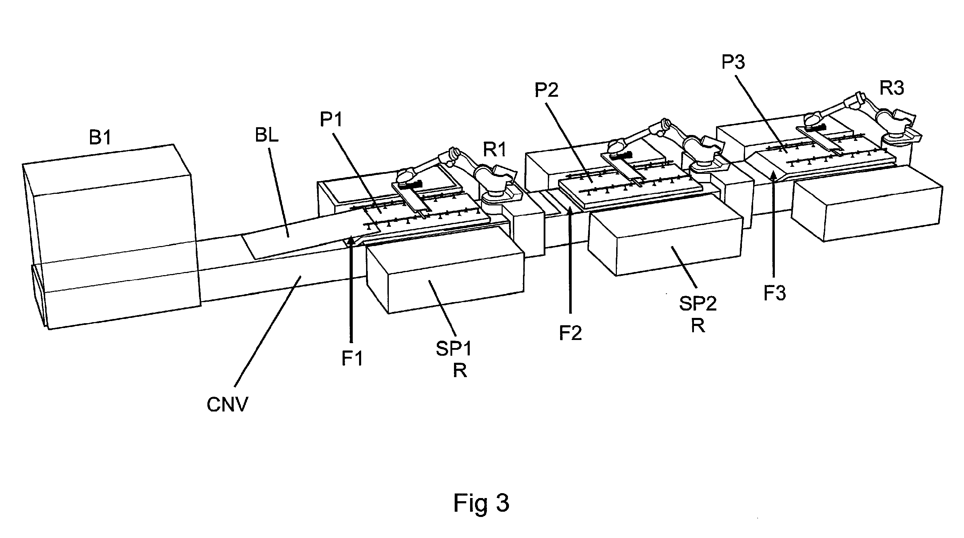

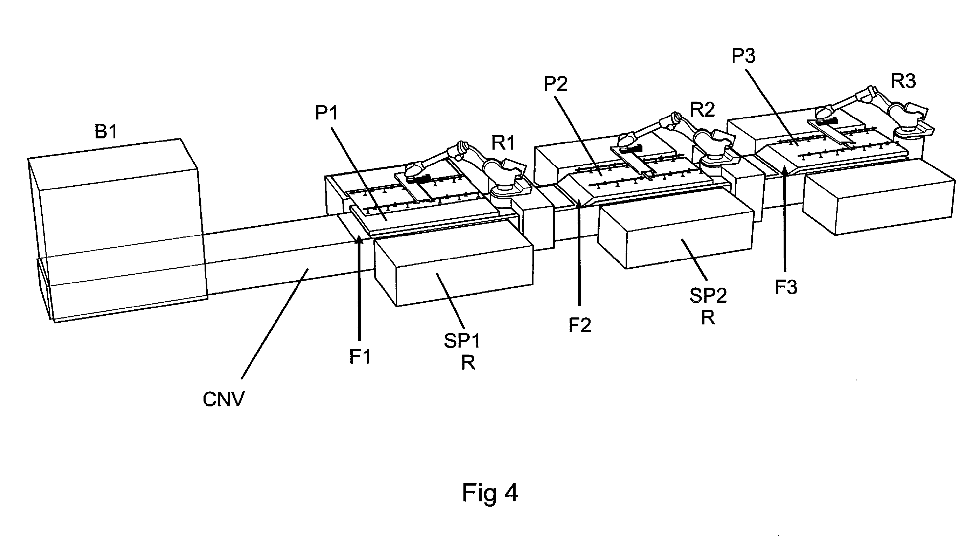

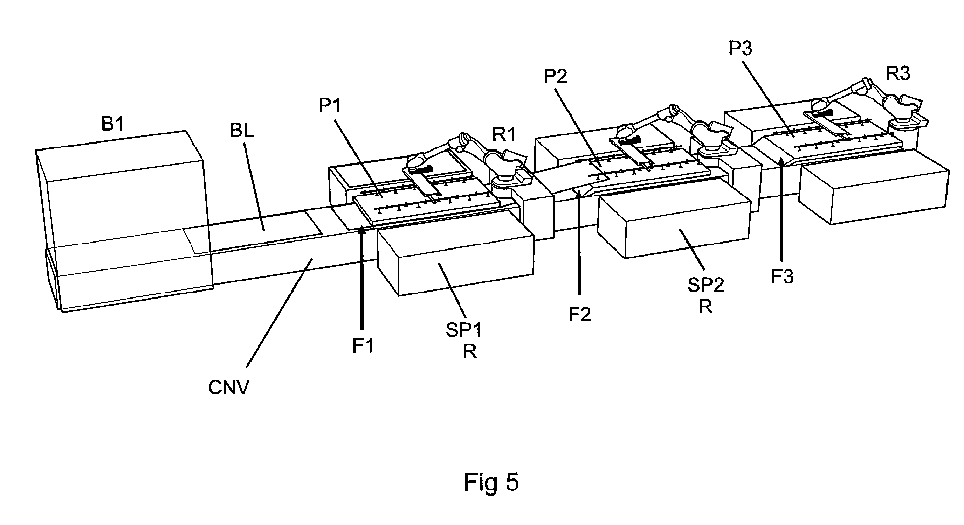

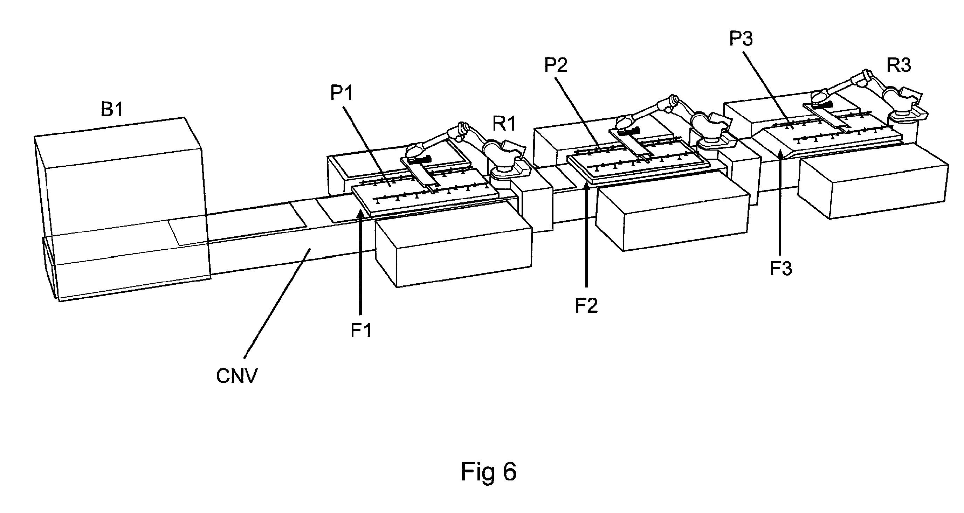

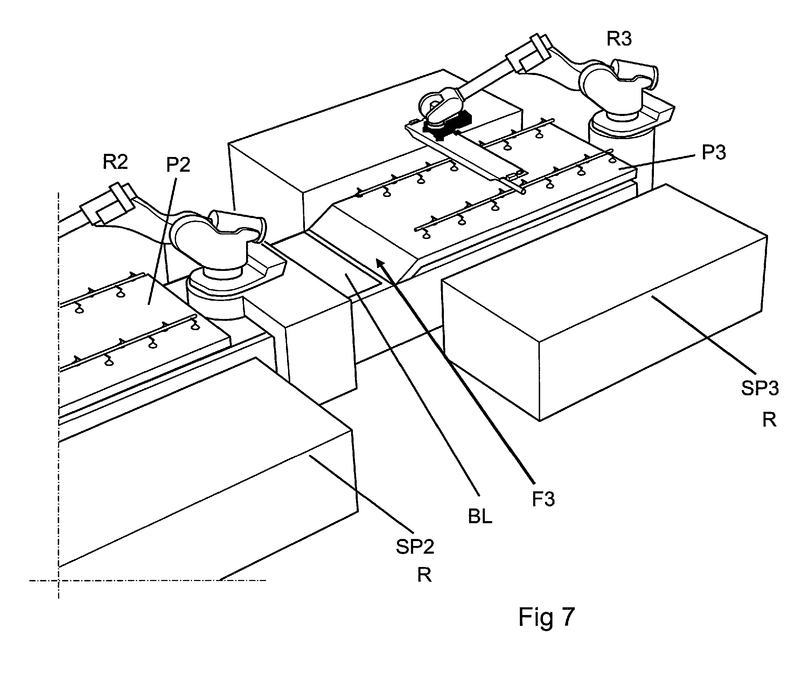

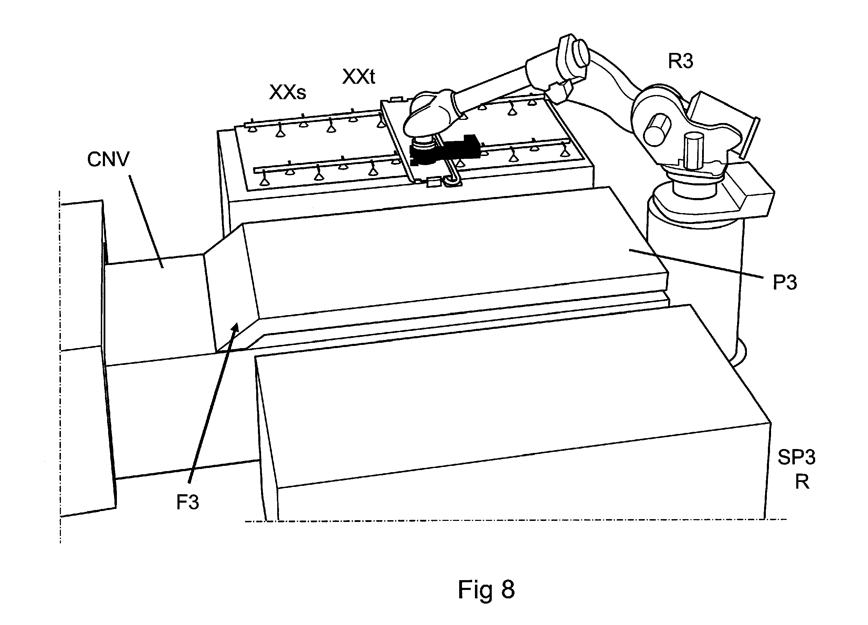

Figure 2 shows stacking station SS1 with first flap F1 up for lifting a blank toward first picking platform P1. Figure 3 shows a blank being pushed up on the picking platform P1 of the first stacking station SS1. Figure 4 shows robot R1 lifting the blank onto to left stack St1L, and that the first flap F1 has moved down (retracted), and the second flap F2 at the second stacking station has moved up to receive the next blank. Figure 5 shows a blank being pushed up on the picking platform P2 of the second stacking station SS2, Figure 6 shows the blank on picking platform P2 ready for robot R2 to grip, lift and stack it on the left St2L or right St2R stack. In Figure 7 the flap F3 is in the up position and a blank is shown approaching the third picking platform P3. In Figure 8 the third robot R3 has moved the blank over to the left stack St3L.

Preferably at least one robot is a standard industrial robot comprising at least four axes, such as a robot with from 4-6 axes. A seven axis industrial robot may also be used. Another alternative is to use a Multi Robot, meaning one robot that is arranged with multiple manipulators. This can also be described as a robot with two arms, meaning two complete manipulators, and one control unit. Two industrial robots per stacking station may be used instead.

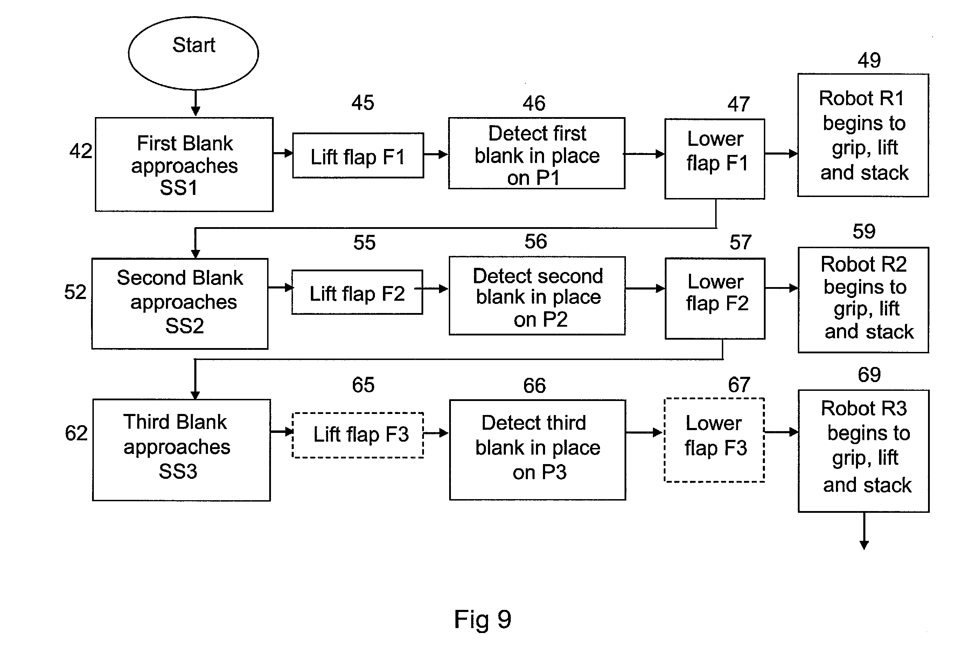

Figure 9 shows a flowchart for a method according to an embodiment of the invention. The method comprises the following actions in the following order;
42 the first blank is detected approaching the first stacking station SS1,
45 the lifting apparatus flap F1 lifts the front part of the workpiece (whether it is a part or a blank),
46 the first workpiece is moved on to the picking platform P1; and also detected to be in place,
47 flap F1 is lowered,
49 robot R1 moves to pick, grip and lift the first workpiece for stacking on stacking pallet StS1R or StS1L,
52 second workpiece has passed under picking platform P1 and is detected approaching SS2,
55 flap F2 is lifted,
56 second workpiece is detected in place on picking platform P2,
57 flap F2 is lowered,
59 robot R2 moves to pick, grip and lift the second workpiece for stacking on stacking pallet StS2R or StS2L,
62 third workpiece has passed under picking platform P2 and is detected approaching SS3
65 if flap 3 is not already in up position then it is lifted now;
66 third workpiece is moved onto picking platform P3 and is detected in place on picking platform P3,
69 robot R3 moves to pick, grip and lift the third blank for stacking on stacking pallet StS3R or StS3L,
67 if StS3 is not the last stacking station in the line then third flap F3 is lowered,

Note that the order in which some operations are carried out may vary, for example step 49 may begin at the same time or after step 47, or step 52 or 55 may start any time after the flap F1 has been lowered. Preferably for each stacking station it is checked that the robot successfully picked up the workpiece from the picking platform eg P2 during a previous cycle before the flap eg F2 is raised in front of an approaching workpiece for a subsequent cycle. This check may be made by checking control signals from the robot control unit, or from sensors arranged on the platform or on the robot, or from other sensors. Such a check to ensure that "pickup successful" may be inserted before any of steps 45, 55, 65.

It should be noted that when the industrial robot R1-R3 that picks up the workpiece (blank or part) from the picking platform P1-P3 it "knows" the position of the workpiece, ie the position and orientation of the blank or part in space is established and recorded in the robot control unit and/or computer programs controlling the robot. The position and orientation is preferably identified by a vision system that sends the information to the robot control unit. The vision system connected to the robot control unit may include one or more digital cameras or video cameras and image processing functions and/or software to quickly recognise the part and one or more reference points in 3-dimensional space.

Then when the stacking robot R1-R3 stacks the workpiece the determination of position and orientation is continued, and no detection or calibration is necessary to establish exactly where in space the part is during this part of the production process. Maintaining information about the position in space of the part of workpiece to be handled is a significant advantage which obviates the need for frequent adjustment and checking of mechanical stops, guides and other devices to locate the part as it moves from one process stage to a subsequent process stage.

In a preferred embodiment instead of blanks to be stacked, the line handles workpieces or parts, blanks which have already been stamped, pressed or otherwise changed in form using a press of some kind into a finished or semi-finished part. Thus instead of handling a continuous series of blanks exiting from a blanking machine a handling line using the same principles handles a stream of stamped parts. The parts are handled in the same way as blanks and stacked up by a robot onto a pallet or trolley. When one trolley or pallet is full with parts, say a right side trolley SS1R at SS1 the robot starts stacking subsequent parts onto another trolley, eg a left side trolley SS1L at the same stacking station. The robots (R1-R3) pick up a part from a picking platform P1-P3 and stack it on a trolley at one of the stacking stations SS1-3. The stream of finished or semi-finished stamped parts exiting a press or press line may be divided up into parallel streams using a number of stacking stations SS1-3 and robots R1-R3 as previously described for blanks. Parts may be stacked directly on top of each other or the parts may be stacked using a separator placed in between successive parts.

In a more preferred embodiment the parts are placed onto racks instead of being stacked on a stacking pallet or stacking trolley. The racks serve the same purpose as the stacking pallet or trolley but are equipped with fixtures or shelves that receive and hold the stamped parts. Often the shape of a semi-finished part is not suitable for being stacked one by one on top of other parts in, for example, a rack with horizontal stacking spaces. Secondly surface finish of the parts, especially external parts such as outer door "skins" for automobile doors, may be damaged by stacking parts on top of one another. Thirdly it may be difficult to separate stacked parts from one another when they are to be transferred to a further process.

An advantage of using racks is that the fixtures or parts of the rack that hold each part are arranged such that the position of the part is known and maintained. This makes subsequent handling by robots easier when the location of the part (in the rack at one of a known number of certain levels or shelves) is already known. Many parts are suitable for stacking onto racks in a horizontal position and in that way are the same to handle as blanks. However, when placing a part on substantially horizontal shelf, or other holder, of a rack often takes more time than eg a traditional placing on a conveyor, or than placing one blank horizontally on top of another blank, but this can be overcome by breaking the flow of exiting parts into a sufficient number of stacking-then-racking stations so that there are enough parallel stacking and racking stations to handle the intended production volume. Other parts may be more suitable for stacking in a vertical position in racks.

The system is preferably arranged with a number of sensors to detect the position of a workpiece at one or many possible places or stages in the stacking line. Sensors such as vision systems, position switches, optical switches, proximity switches, encoders. The system may also have one or more combination arrangements with estimation or calculation devices or software programs for calculating a position of a workpiece based on any of sensor information, sensor position information, stored workpiece position or robot position information. Such information may be used to check or confirm that an action in the process may begin, has begun, has ended, a workpiece has been successfully picked up and so on. Additional time may be required in the process when stacking workpieces on racks because the workpieces are preferably stacked on separate shelves, or other fittings to hold the part, on each rack. The shelf is made so that the workpiece or stamping sits in a predetermined, known position or location on each shelf. The movement of placing each workpiece or stamping on a shelf of the rack usually takes more time that the stacking of blanks. Blanks are preferably stacked one on top of the other and the operation for the robot to lower the blank on top of the stack of blanks, and then release, does not take much time. However reaching in between shelves of a rack, and placing a stamped part or workpiece on the selected shelf, releasing the part, withdrawing from the space between the shelves, may take a little more time that the stacking of blanks.

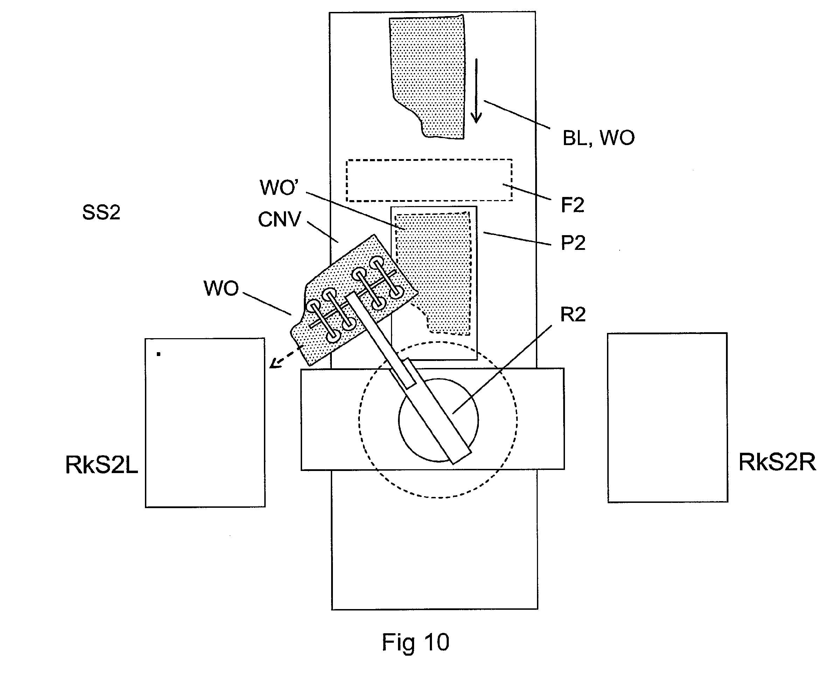

Figure 10 shows a stacking station SS2 according to the invention handling a workpiece in the form of a stamped part or semi-finished part WO. The workpiece, shown as WO is detected on the conveyor and first lifted up onto picking platform P2 by flap F2 and the conveyor action as before. The workpiece position on the picking platform is shown as WO' with a dashed outline and has been detected in that position. A robot, R2 at this station picks up workpiece WO from the platform position WO', and moves it over to a rack, in this case on the left side of the conveyor, left side rack RkS2L. At this point Flap 2 has retracted, is closed, flat on the conveyor, as indicated F2 by the dashed rectangular line, so that the next workpiece will pass under the picking platform and be handled by a subsequent stacking station, as described above in relation to stacking blanks. Another rack RkS2R is in place on the right side, and at this point it is either full and about to be transferred or empty to be used when the left side is full. Workpiece WO, in this example, is shown as a closed contour shape, and is also irregular in shape. However its position is easily found using a vision system connected to the robot control unit. The vision system may include one or more digital cameras or video cameras and image processing functions and/or software to quickly recognise the part and one or more reference points in 3-dimensional space.

Certain parts or workpieces may be stacked in racks in a vertical position. The robot places each part in an individual slot, or other form, for receiving and vertically holding a part in a vertical type of rack. In either of a horizontal or a vertical rack one or more separators may be placed on one or more sides of the part.

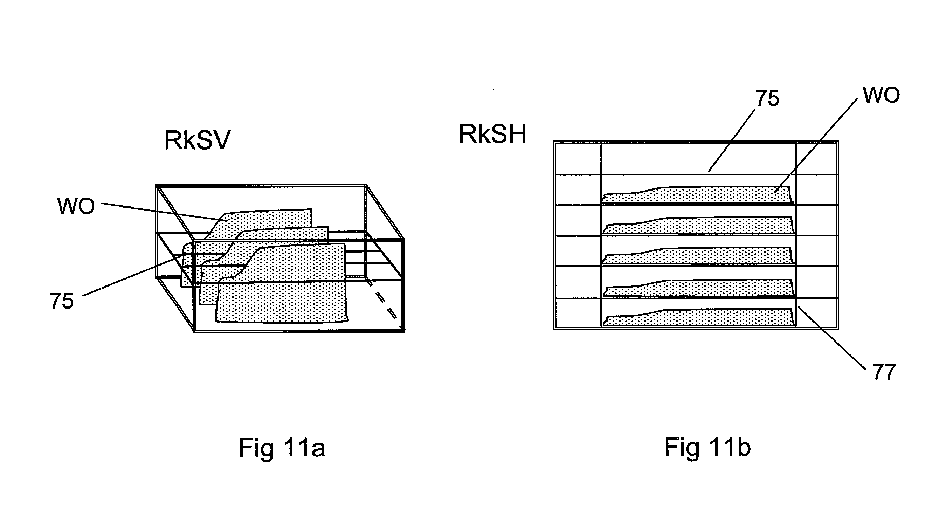

Figure 11a shows schematically a vertical rack RkSV and Figure 11b a horizontal rack RkSH. Vertical rack RkSV includes a number of separating fixtures 75 that form the sides of a space or slot in which the workpiece WO is placed, to stand vertically upright. Horizontal rack RkSH includes a number of horizontal separator fixtures 75 or shelves. In this rack other fixtures 77 are also placed to define in the horizontal axis the position in the rack in which the workpiece is located. Either type of rack may be fitted with pegs, pins, ribs and so on to define known positions in the rack so that the location of each workpiece in a rack is defined and known.

When a rack at eg position Right at a first racking station, which may be called RS1 is full then the robot R1 would begin stacking parts in a rack at the Left position at RS1. The Right rack which is full at RS1 is then removed and transferred to the next stage in the production process.

In another embodiment a movement in the horizontal plane is used to divert the workpiece from the conveyor CNV to a picking platform surface located at the side of the conveyor. The flap may be replaced by rollers or a sort of sub-conveyor, or other suitable device for displacing the workpiece. The workpiece on the conveyor approaching a stacking station is diverted or moved in a direction in a substantially horizontal plane which direction is substantially perpendicular to the conveyor direction. Thus the picking platform is not above the conveyor but is a stable picking surface positioned to one side of the conveyor.

Another object of the present invention is to provide an improved computer program product and a computer readable medium having a program recorded thereon.

Methods of the invention may be supervised, controlled or carried out by one or more computer programs. One or more microprocessors (or processors or computers) comprise a central processing unit CPU connected to or comprised in a robot or multi-robot control unit described above, which processors, PLCs or computers perform the steps of the methods according to one or more aspects of the invention, as described for example with reference to Figure 9. It is to be understood that the computer programs for carrying out methods according to the invention may also be run on one or more general purpose industrial microprocessors or PLCs or computers instead of one or more specially adapted computers or processors.

The computer program comprises computer program code elements or software code portions that make the computer or processor perform the methods using equations, algorithms, data, stored values, calculations, synchronisations and the like for the methods previously described, and for example in relation to the flowchart of Figure 9. A part of the program may be stored in a processor as above, but also in a ROM, RAM, PROM, EPROM or EEPROM chip or similar memory means. The or some of the programs in part or in whole may also be stored locally (or centrally) on, or in, other suitable computer readable medium such as a magnetic disk, CD-ROM or DVD disk, hard disk, magneto-optical memory storage means, in volatile memory, in flash memory, as firmware, or stored on a data server. Other known and suitable media, including removable memory media such as Sony memory stick (TM), a USB memory stick and other removable flash memories, flash drives, hard drives etc. may also be used. The program may also in part be supplied or updated from a data network, including a public network such as the Internet.

It should be noted that while the above describes exemplifying embodiments of the invention, there are several variations and modifications which may be made to the disclosed solution, and in particular to the arrangement of the lifting apparatus flaps F1-F3 shown in Figure 1 without departing from the scope of the present invention as defined in the appended claims.

## Claims

1. A stacking line system for stacking of metal workpieces (WO, BL) comprising a conveyor apparatus (CNV) for transporting said metal workpieces towards one or more stacking stations (SS1-3), where each stacking station is arranged with at least one stacking pallet (St1-3L, St1-3R) on which said metal workpieces are automatically stacked, **characterised in that** at least one industrial robot (R1-R3) is arranged to pick, grip and lift a said metal workpiece (WO, BL) and stack it on a said stacking pallet (St1-3L, St1-3R, RkS1-3L, RkS1-3R).

2. A system according to claim 1, **characterised in that** one or more picking platforms (P1-P3) are arranged fixed above said conveyor apparatus and arranged for receiving a said metal workpiece.

3. A system according to claim 1, **characterised in that** said at least one lifting apparatus (F1-F3) is arranged between the conveyor (CNV) and the picking platform P1-P3) in order to move said metal workpiece (WO, BL) up from the conveyor for said metal workpiece on to a picking platform (P1-P3).

4. A system according to claim 1, **characterised in that** at least one lifting apparatus (F1-F3) is arranged with a motor drive (FM) arranged to, on receipt of a control signal, move a flap into an inclined position between the conveyor (CNV) and the picking platform (P1-P3), alternately retract and drop the flap into a level position.

5. A system according to claim 1, **characterised in that** at least one industrial robot (R1-R3) is a 4-7axis robot or a multi-robot with more than one manipulator.

6. A system according to any one of claim 1 or 5, **characterised in that** at least one industrial robot is arranged with a gripping tool for picking up and then lifting said metal workpieces.

7. A system according to claim 1, **characterised in that** at at least one stacking station two or more stacking pallets (St1-3L, St1-3R) are arranged adjacent the stacking station with at least one stacking pallet (St1-3L) on the opposite side of the conveyor to another stacking pallet (St1-3R).

8. A system according to claim 1, **characterised in that** at at least one stacking station two or more stacking pallets (St1-3a, St1-3b) are arranged adjacent the stacking station with the two or more stacking pallets on the same side of the conveyor.

9. A system according to claim 1, **characterised in that** at at least one stacking station one single stacking pallet (St1-3a, St1-3b) at a time is arranged adjacent the stacking station.

10. A system according to claim 1, **characterised in that** said system comprises one or more sensors and/or estimation or calculation devices for detecting position of a workpiece on any from the group of the conveyor (CNV), the conveyor at a specific position, a picking platform (P1-P3), in the robot gripper (GL).

11. A system according to claim 1, **characterised in that** the system comprises a robot control unit is arranged with computer program means for control of one or more industrial robots (R1-R3) .

12. A system according to claim 10, wherein the robot control unit is arranged with memory storage means for one or more computer programs arranged for control of one or more robots each arranged for picking, gripping, lifting and stacking metal workpieces (WO, BL) in a stacking station of a stacking line.

13. A method for stacking of metal workpieces with a stacking line system comprising a conveyor apparatus (CNV) for transporting said metal workpieces towards one or more stacking stations (SS1-3), where each stacking station is arranged with at least one stacking pallet (St1-3L, St1-3R) on which said metal workpieces are automatically stacked, **characterised by** operating at least one industrial robot (R1-R3) and controlling it to pick, grip and lift (49, 59, 69) a said metal workpiece (WO, BL) and stack it on a said stacking pallet (St1-3L, St1-3R, RkS1-3L, RkS1-3R).

14. A method according to claim 13, **characterised by** lifting (45, 55, 65), by means of a lifting apparatus (F1-F3) a part of said metal workpiece (WO, BL) up for it to be moved onto a picking platform (P1-P3).

15. A method according to claim 14, **characterised by** generating a first sensor signal to confirm that said metal workpiece (WO, BL) has been placed in position on the one of the picking platforms (P1-P3) ready for picking and by generating a second signal that the respective flap (F1-F3) that is in a raised position in front of or before the respective one of the picking platforms (P1-P3) shall be dropped (47, 57, 67), or retracted, and moved to a flat position.

16. A method according to claim 15, **characterised by** generating the first sensor signal using a vision system, or other sensors, to detect the position and orientation of the workpiece (WO, BL) and sending the signal to a control unit of one or more robots (R1-R3).

17. A method according to claim 14, **characterised by** lifting, by means of at least one industrial robot (R1-R3), said metal workpiece (WO, BL) up from the picking platform (P1-P3) and placing it on top of a stacking pallet (St1-3L, St1-3R, RkS1-3L, RkS1-3R) at a stacking station (SS1-SS3).

18. A method according to claim 17, **characterised by** checking that said metal workpiece (WO, BL) has been lifted clear from the picking platform (P1-P3).

19. A method according to claim 14, **characterised by** moving the first lifting apparatus (F1) up (45) and inclining the first lifting apparatus to place a first said metal workpiece on the first picking platform (P1) for picking, lifting and stacking, then retracting (47) the first lifting apparatus to a flat position and moving the second lifting apparatus (F2) up (55) to place a second said metal workpiece on the second picking platform (P2) for lifting and stacking, then retracting (57) the second lifting apparatus.

20. A method according to claim 19, **characterised by** arranging the third lifting apparatus (F3) positioned to lift and place a third said metal workpiece on the third picking platform(P3) for picking, lifting and stacking.

21. A method according to claim 13, **characterised by** generating instructions in a control unit of said stacking line system to control movement of the lifting apparatuses (F1-F3) in synchronisation with movement of said metal workpieces (WO, BL) along said conveyor (CNV) so that each successive metal workpiece moving on the conveyor is handled at a different stacking station than the previous metal workpiece.

22. A method according to any one of claims 14 or 21, **wherein** said method comprises generating instructions to each of the industrial robots (R1-3) for a movement of each robot and its gripper/lifter tool (GL) to grip a metal workpiece (WO, BL) on a picking platform(P1-P3) and lift it up and place it on a stack or on/in a rack.

23. A method according to claim 13, wherein said method comprises generating instructions in any of a PLC control unit or a control unit adapted for controlling one or more industrial robots.

24. A computer program for control of a stacking line system for stacking workpieces, said program comprising computer code and/or computer software means which, when fed into a computer, will make the computer carry out the method according to claims 13-23.

25. A computer readable medium comprising a computer program which when read into a computer or processor will cause the computer or processor to carry out a method according to the steps of any of claims 13-23.

26. Use of a stacking line system for stacking of metal workpieces (WO, BL) comprising a conveyor apparatus (CNV) for transporting said metal workpieces blanks towards one or more stacking stations (SS1-3) according to claim 1 for stacking workpieces, finished or semi-finhed parts or blanks on a pallet or rack in a production process for manufacturing parts for automobiles or white goods.
